# EUROPEAN PATENT APPLICATION

(11) **EP 0 927 815 A2**
(43) Date of publication of application: **07.07.1999**
(21) Application number: 98309213.1
(22) Date of filing: 11.11.1998
(51) Int. Cl.: F01D 21/04, F01D 11/12

(54) **Fan case liner**

(30) Priority: 16.12.1997 US 991833
(71) Applicant: UNITED TECHNOLOGIES CORPORATION, Hartford, CT 06101 (US)
(72) Inventor: Van Duyn, Keven G., Bloomfield, Connecticut 06002 (US)
(74) Representative: Leckey, David Herbert

(57) **Abstract**

A fan containment case assembly (30) of a gas turbine engine (10) includes a blade tip bearing liner (54) disposed therein. In the event of a fan blade loss, the bearing liner allows for circumferential movement of the fan blade tips (38) around the fan case (42). Thus, the liner reduces the destructive cutting away of the fan case, minimizing damage to the fan case and decreasing torque loading of the fan case from rotor deflections.

## Description

The present invention relates to gas turbine engines, and more particularly, to providing a bearing liner in the fan case of the engine to minimize damage to the fan case in the event of a fan blade loss.

A gas turbine engine, such as a turbofan engine for an aircraft, includes a fan section, a compression section, a combustion section, and a turbine section. An axis of the engine is centrally disposed within the engine, and extends longitudinally through these sections. A primary flow path for working medium gases extends axially through the engine. A secondary flow path for working medium gases extends parallel to and radially outward of the primary flow path.

During operation, the fan draws air into the engine. The fan raises the pressure of the air drawn along the secondary flow path, thus producing useful thrust. The air drawn along the primary flow path into the compressor section is compressed. The compressed air is channelled to the combustor section, where fuel is added to the compressed air, and the air-fuel mixture is burned. The products of combustion are discharged to the turbine section. The turbine section extracts work from these products to power the fan and compressor. Any energy from the products of combustion not needed to drive the fan and compressor contributes to useful thrust.

The fan section includes a rotor assembly and a stator assembly. The rotor assembly of the fan includes a rotor disk and a plurality of outwardly extending fan blades. Each fan blade includes an airfoil portion, a root portion, and a tip portion. The airfoil portion extends through the flow path and interacts with the working medium gases to transfer energy between the fan blade and working medium gases. The stator assembly includes a fan containment case assembly, which circumscribes the rotor assembly in close proximity to the tips of the fan blades. The fan containment case assembly typically includes a rigid, cylindrical support structure, also known as the fan case, surrounded by a plurality of fabric wraps disposed radially outwardly of the fan case. The fabric wraps are usually formed from a high strength material, such as KEVLAR® (KEVLAR is a registered trademark of E. I. Du Pont De Nemours and Company). In the event of a fan blade loss, a detached fan blade is typically thrown outwardly and passes through the case but is caught in the fabric wraps.

In addition to the fan case and fabric wraps, the fan containment case assembly also includes a plurality of circumferentially adjacent acoustic panels and a liner defined by a plurality of rub strips disposed radially inwardly of the fan case. The acoustic panels are typically a honeycomb type of material that minimizes noise levels associated with the fan. The liner includes a flow surface that faces inwards towards the array of fan blades.

The rub strip liner includes a plurality of circumferentially adjacent segments formed from a relatively compliant material. The rub strips function as a seal. The tips of the fan blades are very close to the stationary rub strip. The narrow gap between the tips of the fan blades and the rub strip minimizes air leakage which in turn leads to higher fan and thus engine efficiency and greater power output.

During engine operation, fan blades may move outwardly toward the fan case. This outwardly movement of the fan blades may occur in response to operative centrifugal forces. Due to the narrow gap between the tips of the fan blade and the rub strip, there is a possibility of contact between the tip and the rub strip. This can occur, for example, when the engine is started or if the pilot advances the throttle for more power. In these cases, the fan blades can become longer due to centrifugal forces and thus abrade the rub strip seal. In the event that the tip of a fan blade makes contact with the rub strips, the compliance of the rub strips eliminates or minimizes the risk of damage to the fan blades.

As described hereinabove, it is advantageous to have a rub strip liner in close proximity during normal engine operation. However, during severe rotor imbalance, it is highly probable that the rub strip would be abraded and be destroyed by the fan blades.

Severe rotor imbalance can occur in an engine, particularly after a fan blade breaks off from the rotor assembly. One cause of fan blade loss is impact with foreign objects, such as birds, hailstones or other objects which, on occasion, are ingested into the engine. The detached fan blade is thrown outwardly and passes through the fan case, but is typically caught by the fabric wraps in the fan containment case assembly. Blade loss produces an imbalance in the rotor and causes the rotor shaft to deflect radially outwardly.
Deflection of the rotor away from its longitudinal axis may also lead to additional damage to the rotor assembly. The more the rotor deflects, the greater is the radial load on the rotor bearing supports.

The fan case structure stops the deflection of the rotor assembly. The damage to the rotor assembly is reduced by decreasing the fan tip-to-case clearance as the shaft deflection is limited by the proximal portion of the fan case assembly. Minimizing the amount of radial deflection of the shaft minimizes the likelihood of damage occurring in the shaft, the rotor bearings and the bearing support structures.

Heretofore, the deflection of the shaft was restrained by the fan blades embedding themselves in the fan case. In doing so, the fan blades rapidly abrade the rub strip, cut away and destroy the fan case because the blades are usually of a harder material than the fan case. As the fan blades continue to rotate, they couple with the static fan case structure and transmit the kinetic energy of the rotor shaft to the case, causing twisting of and damage to the case. Due to the coupling of the rotor shaft with the fan case, high torque loads are transmitted to the fan case. This torque loading of the fan case during a fan blade loss event, results in tremendous loads being imposed upon the related engine mounts and engine case structure.

Thus, the challenge for modern gas turbine engines, during fan blade loss events, is the limiting of the rotor shaft deflection while minimizing the torque loading of the fan case from the rotor shaft kinetics.

According to a first aspect, the present invention provides a gas turbine engine disposed about a longitudinal axis comprising:
a rotor including a fan, the fan having blades; and
a stator including a fan case disposed radially outwardly of the fan; and
a liner detachably mounted in the fan case and circumscribing the fan blades, said fan blades being located close enough to the liner so as to engage the liner should, in use, the rotor deflect in response to a fan blade loss condition, said liner being detachable from said fan case when urged circumferentially with a predetermined force by the fan blades, whereby in the event of a fan blade loss condition, the liner becomes free to rotate relative to the fan case.

From a second aspect, the present invention provides a fan containment assembly for a gas turbine engine comprising a fan case arranged in use radially outwardly of a fan rotor, and a liner coupled to the case so as in use to circumscribe the rotor, the liner being coupled to the case in such a manner that it will detach from the case in the event that a predetermined circumferential force is applied thereto so that it may rotate circumferentially with respect to the case.

In a preferred embodiment the fan case includes a liner disposed in a track, attached thereto, wherein during a fan blade loss condition, the liner is free to rotate along the track and support the blade tips by allowing them to circumferentially rotate with the liner thus reducing the destructive cutting away of the fan case. The bearing liner of the fan case is free to rotate along the track only when acted upon by a predetermined amount of force, for example, force associated with the release of a fan blade. By allowing the blades to circumferentially rotate with the liner, torque loading of the fan case is minimized. Further, the fan case structure of the present invention limits the deflection of the rotor shaft during a fan blade loss event. In one embodiment of the invention, the liner is segmented.

Thus in the event of a blade loss, the case liner will detach from the case and be free to rotate so as to accommodate circumferential rotor movement around the fan case, thus minimizing damage to the fan case due to further embedding and cutting away of the fan case by the blades.

A primary advantage of the present invention is the minimisation of in damage to the fan case, thus resulting in a durable fan case in the event of a fan blade loss. The blade tip bearing liner of the present invention reduces the destructive cutting away of the fan case by the fan blades. A further advantage of the liner of the present invention is its ability to provide an appropriate restraining structure to the deflection of the rotor shaft during a fan blade loss event. In addition, the bearing liner reduces frictional forces and therefore, the torque loading transmitted from the rotor to the engine cases. As a result, the present invention decreases the net weight of the engine. Any increase in engine weight due to the present invention bearing liner is more than offset by a decrease in weight of associated engine structure needed for accommodation of engine imbalance loads during a fan blade loss condition. By decreasing the torque loading of the fan case, during a fan blade loss condition, the present invention requires less strengthening of the static engine structure which has to withstand less imbalance loads. Thus, the engine supporting structure which includes the fan containment system, the engine rotor, rotor bearing structure, the engine mounts, the wing and fuselage can be decreased in weight. Another advantage is the ease and cost of manufacturing and incorporating into the fan case the liner of the present invention. The simplicity of the structure of the liner and the use of economic materials, allows for cost effective manufacturing processes.

A preferred embodiment of the invention will now be described, by way of example only, and with reference to the accompanying drawings in which:

FIG. 1 is a perspective view of a typical axial flow, gas turbine engine.

FIG. 2 is a perspective view of the rotor assembly of a prior art gas turbine engine showing a released fan blade.

FIG. 3 is a cross-sectional schematic representation of the fan containment case assembly of the prior art engine taken along the lines 3-3 of FIG. 2.

FIG. 3A is a cross-sectional schematic representation of the fan containment case assembly taken along the lines 3A-3A of FIG. 3.

FIG. 4 is a cross-sectional schematic representation of the fan containment case assembly including the liner of the present invention.

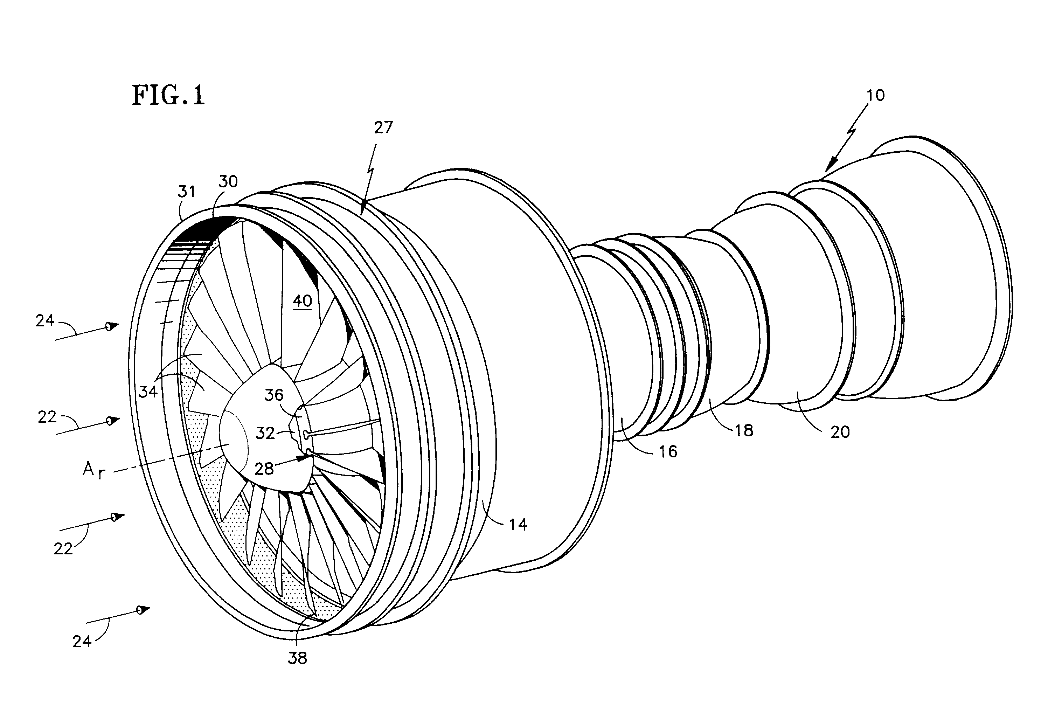

Referring to FIG. 1, an axial flow, turbofan gas turbine engine 10 comprises a fan section 14, a compressor section 16, a combustor section 18 and a turbine section 20. An axis of the engine Ar is centrally disposed within the engine and extends longitudinally through these sections. A primary flow path 22 for working medium gases extends longitudinally along the axis Ar. The secondary flow path 24 for working medium gases extends parallel to and radially outward of the primary flow path 22.

The fan section 14 includes a stator assembly 27 and a rotor assembly 28. The stator assembly has a fan containment case assembly 30 which forms the outer wall of the secondary flow path 24. The rotor assembly 28 includes a rotor disk 32 and a plurality of fan blades 34. Each fan blade 34 extends outwardly from the rotor disk 32 across the working medium flow paths 22 and 24 into proximity with the fan containment case assembly 30. Each fan blade 34 has a root portion 36, an opposed tip 38, and a midspan portion 40 extending therebetween.

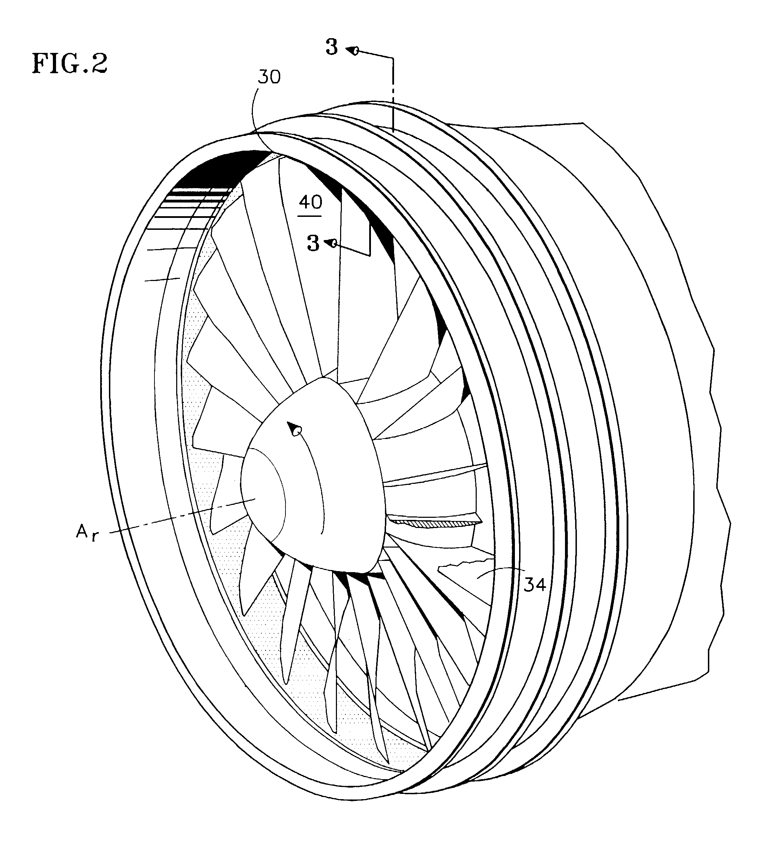

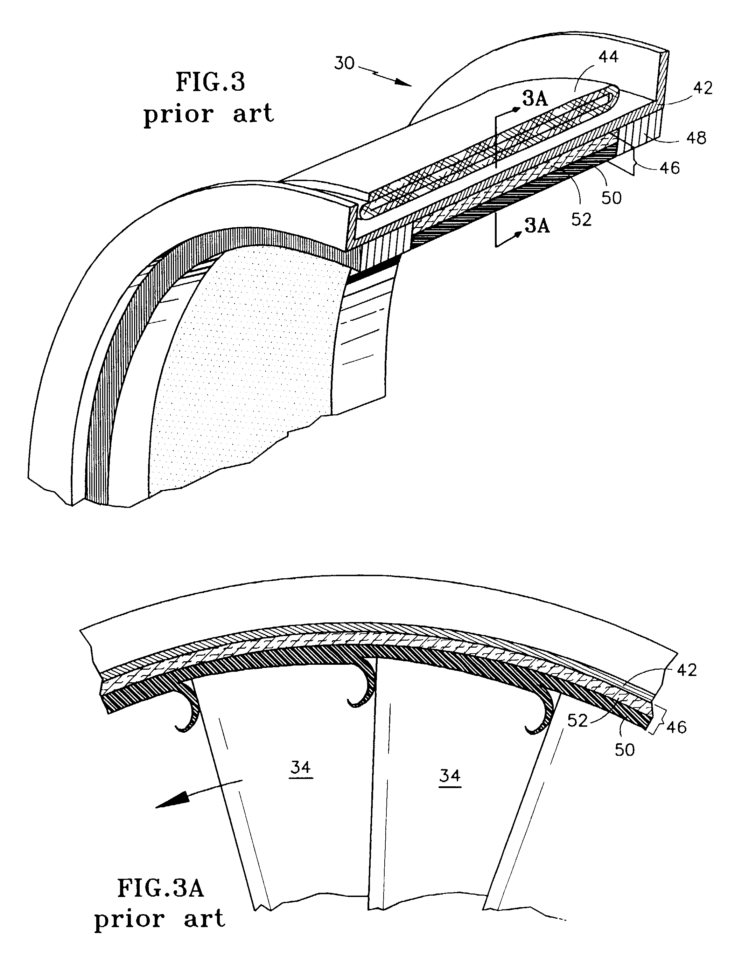

Referring to FIGS. 2 and 3, the fan containment case assembly 30 of the prior art circumscribes the rotor assembly 28 in close proximity to the tips 38 of the fan blades 34. The containment case assembly 30 includes a fan case 42, typically a solid metal casing which forms a rigid structure to support a plurality of fabric wraps 44 disposed radially outwardly of the fan case. The term "fabric" 44 includes, but is not limited to, tape, woven material or the like, and restrains a fan blade in the event of a fan blade loss.

The fan containment case assembly 30 also includes a plurality of circumferentially adjacent rub strips 46 and a plurality of circumferentially adjacent acoustic panels 48 disposed radially inwardly of the fan case 42 support structure. The exposed surface 50 of the rub strips 46 is formed from a relatively compliant viscoelastic material such as a silicone rubber compound. Typically, the rub strips 46 have a harder backing 52 formed from KEVLAR® and epoxy. The rub strips 46 essentially, to a degree, seal the fan blades 34 to the fan case 42 to minimize the amount of air that flows around the fan blades, thus reducing fluid flow leakage around the fan blades to improve fan performance. In the event that the tip 38 of a fan blade 34 makes contact with the rub strips 46, the compliance of the rub strips minimizes the risk of damage to the fan blade 34.

Referring to FIG. 3A, in the event of a fan blade loss during engine operation, the rub strips 46 of the prior art are cut away and destroyed by the fan blades 34. Typically, the detached blade would be thrown radially outwardly (as shown in FIG. 2), and pass through the fan case 42 and would be caught by the fabric wraps 44 in the fan containment case assembly 30.

The blade loss produces an imbalance in the rotor and causes the rotor to deflect radially outwardly in close proximity to the fan case 42. The separation between the fan blades 34 and the inner surface of the fan case is minimized in modern engines to decrease the radial deflection of the rotor assembly. Due to the rotor deflection and the reduced clearance between the fan blades 34 and the fan case 42, the fan blade tips would rapidly cut away the compliant rub strip 46 in the innermost surface of the fan containment case assembly. The fan blade tips would then firmly embed and couple with the fan case. The kinetic energy of the rotor shaft would then be transmitted to the case, causing twisting of and damage to the fan case. High torque loads would also be transmitted to the fan case, resulting in high loads imposed upon the related engine mounts and engine case structure.

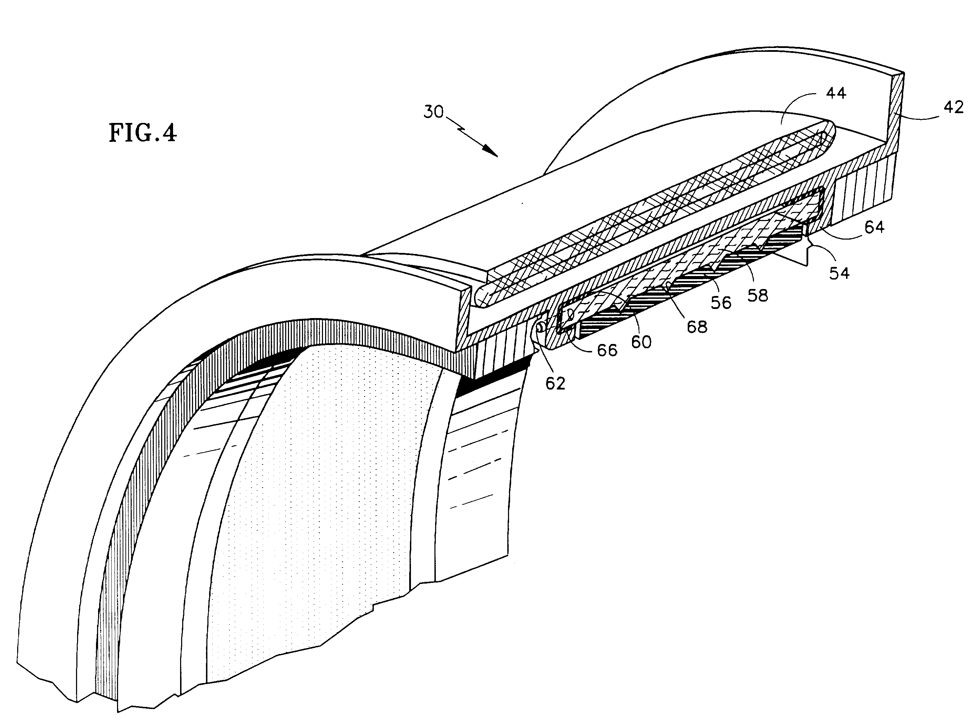

Referring to FIG. 4, a blade tip bearing liner 54 of the present invention is disposed in the innermost surface of the fan containment case assembly. The exposed surface 56 of the liner 54 is formed from a relatively compliant viscoelastic material such as that from which the rub strips in modern engines are formed. The liner also includes a hard backing 58 formed from KEVLAR® and epoxy. The bearing liner may be made in one piece or made in segments. A track 60 extends circumferentially about the interior of the fan case 42 and adapts the fan case to receive the bearing liner 54. Fasteners 62, such as shear pins or cast-in lugs secure the bearing liner in the track 60. The fasteners are sized to shear at a predetermined force, such as during a fan blade loss event. The size and material of the fasteners depend on the size, geometry and operating characteristics of the fan blades.

The track 60 has two opposed in-turned flanges 64 with right angle bends. The liner 54 has flanges 66 which complement the track flanges 64. The flanges 64, 66 maintain axial alignment and stability of the liner 54 inside the track 60. Further alignment of the liner 54 is maintained by the guide ridges 68 formed in the hard backing 58 of the liner 54.

During normal engine operation, fan blades experience a lengthening due to operative centrifugal forces. Thus, the fan blades move outwardly toward the fan case. As the fan blades move outwardly, the blades wear away a portion of the bearing liner. As the fan case reaches steady-state position, the fan case expands away from the fan blades due to thermal growth of the case. Thus, a narrow gap between the fan blades and rub strip is maintained to minimize air leakage therebetween.

In the event of a fan blade loss, an imbalance in the rotor occurs which causes the fan blades to deflect radially outwardly in close proximity to the bearing liner 54. As the fan blade tips embed into the bearing liner, kinetic energy of the rotor shaft is transmitted to the liner and in turn to the fasteners 62. As the torque level increases, the shearing capability of the fasteners is approached. At a predetermined torque level, the fasteners and thus the bearing liner-to-track interface shears. The bearing liner, which is still supporting the fan blades, then accelerates to the rotor speed of the blades. As the relative speed between the blades and the bearing liner approaches zero, no further abrading or cutting away of the liner can occur. The fan blades move circumferentially along the liner. The embedding of the blades in the fan case is eliminated or reduced; and as a result, the unwanted torque loading of the case is reduced. Without the bearing liner, the fan blades would continue to cut away and firmly embed in the fan case. The present invention, thus provides for a system that allows for limiting rotor deflection during a fan blade loss event and provides a bearing function which eliminates or reduces the generation of additional torque loading on the case.

A primary advantage of the blade tip bearing liner of the present invention is the minimization of damage to the fan case thus, resulting in a durable fan case in the event of a fan blade loss. The liner reduces the destructive cutting away of the fan case by the fan blades. A further advantage of the present invention bearing liner is its ability to provide an appropriate restraining structure to the deflection of the rotor shaft during a fan blade loss event. In addition, the liner reduces frictional forces, and as a result, reduces torque loads transmitted from the fan rotor to the case. As a result, the present invention decreases the net weight of the engine. Any increase in engine weight due to the present invention bearing liner is more than offset by a decrease in weight of associated engine structure needed for accommodation of engine imbalance loads during a fan blade loss condition. By decreasing the torque loading of the fan case, during a fan blade loss condition, the present invention requires less strengthening of the static engine structure which has to withstand less imbalance loads. Thus, the engine supporting structure which includes the fan containment system, the engine rotor, rotor bearing structure, the engine mounts, the wing and fuselage can be decreased in weight.

Another advantage is the ease and cost of manufacturing and incorporating the bearing liner of the present invention. The simplicity of the structure of the liner and the use of economical materials, allows for cost effective manufacturing processes.

Although the invention has been shown and described with respect to detailed embodiments thereof, it should be understood by those skilled in the art that various changes in form and detail thereof may be made without departing from the scope of the claimed invention.

## Claims

1. A gas turbine engine (10) disposed about a longitudinal axis (Aᵣ) comprising:
a rotor (28) including a fan, the fan having blades (34) ; and
a stator (27) including a fan case (42) disposed radially outwardly of the fan; and
a liner (54) detachably mounted in the fan case (42) and circumscribing the fan blades (34), said fan blades (34) being located close enough to the liner so as to engage the liner should, in use, the rotor deflect in response to a fan blade loss condition, said liner being detachable from said fan case when urged circumferentially with a predetermined force by the fan blades, whereby in the event of a fan blade loss condition, the liner becomes free to rotate relative to the fan case.

2. A gas turbine engine (10) as claimed in claim 1, characterized by the liner (54) being disposed in a track (60) supported in the fan case (42).

3. A gas turbine engine (10) as claimed in claim 2, further characterized by the fan case (42) having an inner surface to which are mounted retaining means (62) to fixedly support the liner in the track (60).

4. A gas turbine engine (10) as claimed in claim 3, wherein the retaining means (62) comprises frangible fastening means.

5. A gas turbine engine (10) as claimed in claim 4, further characterized by the retaining means (62) comprising shear pins.

6. A fan containment assembly for a gas turbine engine comprising a fan case (42) arranged in use radially outwardly of a fan rotor (28), and a liner (54) coupled to the case (42) so as in use to circumscribe the rotor (28), the liner being coupled to the case (42) in such a manner that it will detach from the case in the event that a predetermined circumferential force is applied thereto so that it may rotate circumferentially with respect to the case.
